# EUROPEAN PATENT SPECIFICATION

(11) **EP 3 483 426 B1**
(45) Date of publication and mention of the grant of the patent: **23.09.2020**
(21) Application number: 17824356.4
(22) Date of filing: 07.07.2017
(51) Int. Cl.: F03D 7/04, F16H 1/22

(54) **WINDMILL DRIVE SYSTEM AND WINDMILL**
WINDMÜHLENANTRIEBSSYSTEM UND WINDMÜHLE
SYSTÈME D'ENTRAÎNEMENT D'UN MOULIN A VENT ET MOULIN A VENT

(30) Priority: 08.07.2016 JP 2016135944
(43) Date of publication of application: 15.05.2019
(73) Proprietor: Nabtesco Corporation, Tokyo 102-0093 (JP)
(72) Inventor: NOHARA Osamu, Fuwa-gun Gifu 503-2121 (JP); OSAKO Haruna, Fuwa-gun Gifu 503-2121 (JP)
(74) Representative: Grünecker Patent- und Rechtsanwälte PartG mbB
(86) International application number: PCT/JP2017/025027
(87) International publication number: WO 2018/008753

(56) References cited:
- EP-A1- 2 402 597
- EP-A1- 3 232 054
- WO-A1-2009/150715
- WO-A1-2016/181729
- JP-A- 2011 127 551
- JP-A- 2012 013 085
- JP-A- 2015 521 711
- JP-A- 2015 533 999
- US-A1- 2010 014 969
- US-A1- 2013 088 009
- US-A1- 2013 115 043
- US-A1- 2016 131 106

## Description

### TECHNICAL FIELD

The present invention relates to a wind turbine drive system and a wind turbine having a plurality of drive devices for driving a ring gear.

### BACKGROUND

EP 2 402 597 A1 discloses a wind turbine yaw system with a yaw gear, at least two pinion gears, at least two drive units, where each drive unit is associated to one of the pinion gears for driving the respective pinion gear, is provided. The yaw system comprises a control system with a controller for generating for each drive unit a drive unit control signal for controlling the respective drive unit according to a drive unit reference signal comprising at least one desired operational parameter value for the respective drive unit so as to realise the at least one desired operational parameter value in the respective drive unit. The control system comprises at least one feedback loop for each drive unit feeding at least one drive unit feedback signal comprising at least the actual value of one operational parameter of the respective drive unit back to the controller. Furthermore, the controller is adapted to generate the drive unit control signals based on the reference signal and the feedback signals.
In a wind turbine used in a wind power generator or the like, generally, pitch control and yaw control are performed so that blades rotate efficiently. In the pitch control, an angle of each of the blades with respect to a rotor is changed in accordance with a wind velocity, and in the yaw control, orientations of the plurality of blades and the rotor are changed in accordance with a wind direction.

The pitch control and the yaw control require a relatively large drive force and thus typically use a plurality of drive devices. That is, the plurality of drive devices are arranged around one ring gear, and each of the drive devices applies a rotational force to the ring gear via an output portion thereof to cause rotation of the ring gear. The pitch control and the yaw control are performed through said rotation of the ring gear. A load applied to each of the plurality of drive devices is not necessarily equal among the drive devices, and a load applied to a particular one of the drive devices may be larger than a load applied to each of the other drive devices. In some cases, an unexpectedly excessive load is applied to a particular one of the drive devices and the ring gear. An excessive load acting on the various elements of the wind turbine might lead to trouble, such as a breakage, in the various elements. Thus, preferably, such trouble is avoided before it happens.

For example, Patent Literature 1 discloses a wind power generator in which a yaw drive unit for controlling positions of a nacelle and a rotor with respect to a tower is installed at a connecting portion between the tower and the nacelle. The yaw drive unit in this wind power generator includes a releasing unit for releasing a yaw drive force from being transmitted. This releasing unit suppresses an influence of yaw control trouble caused by a failure of a yaw drive device, thus achieving improved availability.

### RELEVANT REFERENCES

### LIST OF RELEVANT PATENT LITERATURES

Patent Literature 1: Japanese Patent Application Publication No. 2015-140777

### SUMMARY

In the above-mentioned pitch control and yaw control, in a case where the angle of each of the blades with respect to the rotor is fixed or the orientations of the plurality of blades and the rotor are fixed, the ring gear is stopped. Even while the ring gear is stopped, the output portion of each of the drive devices is maintained in a state of meshing with the ring gear, and thus depending on a relative position between teeth of the ring gear and teeth of the output portion of each of the drive devices, the ring gear and the output portions may contact with each other, causing stress (a load) to be generated therebetween. Particularly in a case where a motor braking portion applies a force for braking rotation to a drive shaft of a motor drive portion so as to actively fix a rotation position of the output shaft of each of the drive devices, a load between the ring gear and the output portions is likely to be increased. For example, in a case where a wind having power equal to or larger than normal such as in a typhoon is blown, a load between the ring gear and the output portions may be unintentionally increased.

When the ring gear is driven by the plurality of drive devices in order to perform the pitch control and the yaw control, due to a fact that there is variation in size of a backlash (a gap) between the output portion of each of the drive devices and the ring gear, an excessive load may be applied to a particular one of the plurality of drive devices. In recent years, with an increase in wind turbine output, the number of the drive devices used to drive the ring gear needs to be increased, and thus the above-described problem has become particularly pronounced. For example, when the ring gear is caused to rotate by an external force such as wind power applied to the wind turbine that has been stopped, a load acts between the output portion of each of the drive devices and the ring gear. In such a case, since a size of a backlash between each of the drive devices and the ring gear is different depending on the different drive devices, a load acting between the output portion and the ring gear varies among the drive devices. As thus described, based on a backlash, a load acting between the output portion and the ring gear varies among the drive devices, so that the drive devices include a type on which a relatively large load acts and a type on which a relatively small load acts.

In a case where a load uniformly acts on each of all the drive devices meshing with the ring gear, the load applied is made uniform among the drive devices, and thus a magnitude of the load applied to each of the drive devices can be reduced. In reality, however, since there is variation in size of a backlash among the drive devices as mentioned above, there is a particular one of the drive devices, on which a load larger than a load acting on each of the other drive devices acts. A load is locally concentrated on such a particular one of the drive devices, in which case an excessive load acts not only on said particular one of the drive devices but also on the ring gear and might eventually lead to trouble such as a breakage of the drive devices or the ring gear. Furthermore, with a relatively large load continuously acting on a particular one of the drive devices, a load larger than normal is applied to the particular one of the drive devices, resulting in a reduction in device life.

Such local concentration of stress (a load) and a reduction in device life may occur similarly also in a case where a power shut-off mechanism capable of releasing a drive force from being transmitted, such as the above-mentioned releasing unit of Patent Literature 1, namely, a clutch structure is provided in each of the drive devices. That is, in a case where a yaw drive force is released from being transmitted in one of the plurality of drive devices and thus the one of the plurality of drive devices is substantially disabled, an increased load is applied to each of the other drive devices. In this case, when a load acting between the output portion and the ring gear varies among said other drive devices, an even larger load acts on any of the other drive devices on which a relatively large load acts. This might result in local concentration of an excessive load on a particular area or a further reduction in device life.

The ring gear, in particular, is a large-sized and costly device, and thus repairing and replacing the ring gear requires a considerable amount of time, work, and cost. Thus, preferably, trouble such as a breakage of the ring gear is prevented as much as possible before it happens. For this reason, in a case where the ring gear is driven and stopped by the plurality of drive devices, it is desirable to prevent a large load from locally acting on the ring gear so as to avoid trouble such as a breakage of the ring gear. From the viewpoint of preventing an excessive load from locally acting on the ring gear, it is particularly desirable to suppress variation in load applied to each of the drive devices so that a magnitude of the load is made uniform in a balanced manner among the drive devices.

In view of the above-mentioned circumstances, it is an object of the present invention to provide a wind turbine drive system and a wind turbine that are capable of preventing an excessive load from acting on the drive devices and the ring gear.

One aspect of the present invention relates to a wind turbine drive system including a plurality of drive devices provided in a first structure and including a meshing portion meshing with a ring gear provided in a second structure, the first structure and the second structure being configured to rotate relative to each other, each of the plurality of drive devices including a motor drive portion for outputting power and a speed reducing portion for receiving the power transmitted from the motor drive portion, a ring gear braking portion for braking the ring gear, a state quantity detection unit for detecting, for each of the plurality of drive devices, a load between the meshing portion of the each of the plurality of drive devices and the ring gear, and a control unit for controlling the motor drive portion of each of the plurality of drive devices and/or the ring gear braking portion based on the load for the each of the plurality of drive devices detected by the state quantity detection unit. In a case where, based on a result of detection by the state quantity detection unit, a degree of variation in the load among the plurality of drive devices is outside a permissible range, the control unit performs at least one of a first control process and a second control process, the first control process being a process of controlling the motor drive portions to prevent an increase in the degree of variation in the load among the plurality of drive devices, the second control process being a process of controlling the ring gear braking portion to increase or decrease a braking force to be applied from the ring gear braking portion to the ring gear.

It is possible that each of the plurality of drive devices is fixed to the first structure via a fastener, and the state quantity detection unit detects the load by measuring an amount of a force acting on the fastener.

The state quantity detection unit may detect the load by measuring an amount of a force acting on the speed reducing portion. Particularly, the state quantity detection unit may detect bending stress, torsional stress, or the like applied to a case of the speed reducing portion.

In the first control process, the control unit may adjust rotation or a torque of the motor drive portion of each of the plurality of drive devices.

The control unit may perform the first control process so as to reduce the load for a drive device for which the load is largest among the plurality of drive devices.

It is possible that each of the plurality of drive devices further includes a motor braking portion for braking the corresponding motor drive portion, and when performing the first control process, the control unit controls the motor drive portions and the motor braking portions.

It is possible that the ring gear braking portion is provided with a caliper brake mechanism, and the control unit controls the caliper brake mechanism in the second control process.

Based on a magnitude of the load for each of the plurality of drive devices detected by the state quantity detection unit, the control unit may determine whether or not to perform at least one of the first control process and the second control process.

Another aspect of the present invention relates to a wind turbine including a first structure and a second structure configured to rotate relative to each other, a ring gear provided in the second structure, and the above-described wind turbine drive system.

### ADVANTAGES

According to the present invention, it is possible to prevent an excessive load from acting on the drive devices and the ring gear.

### BRIEF DESCRIPTION OF THE DRAWINGS

Fig. 1 is a perspective view of a wind turbine.
Fig. 2 is a sectional view showing part of a tower and a nacelle.
Fig. 3 is a plan view showing an arrangement of drive devices in a movable section shown in Fig. 2.
Fig. 4 is a view of a drive device as seen from a lateral side, part of which is shown in cross-section.
Fig. 5 is a view of an installation portion of the drive device, part of which is shown in cross-section.
Fig. 6 is a view schematically showing a partial cross-section of an electric motor.
Fig. 7 is a block diagram for explaining a functional configuration of a controller.
Fig. 8 is a view showing one example of a control process flow.
Fig. 9 is a view showing another example of the control process flow.
Fig. 10 is a view showing an application example of the control process flows shown in Fig. 8 and Fig. 9.

### DESCRIPTION OF THE PREFERRED EMBODIMENTS

An embodiment of the present invention will now be described with reference to the appended drawings. In the drawings, for the sake of ease of illustration and understanding, a scale size, a dimensional ratio, and so on are altered or exaggerated as appropriate from actual values.

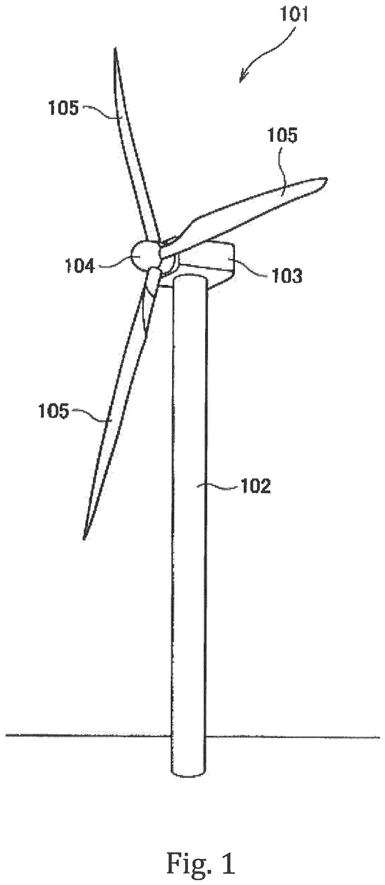

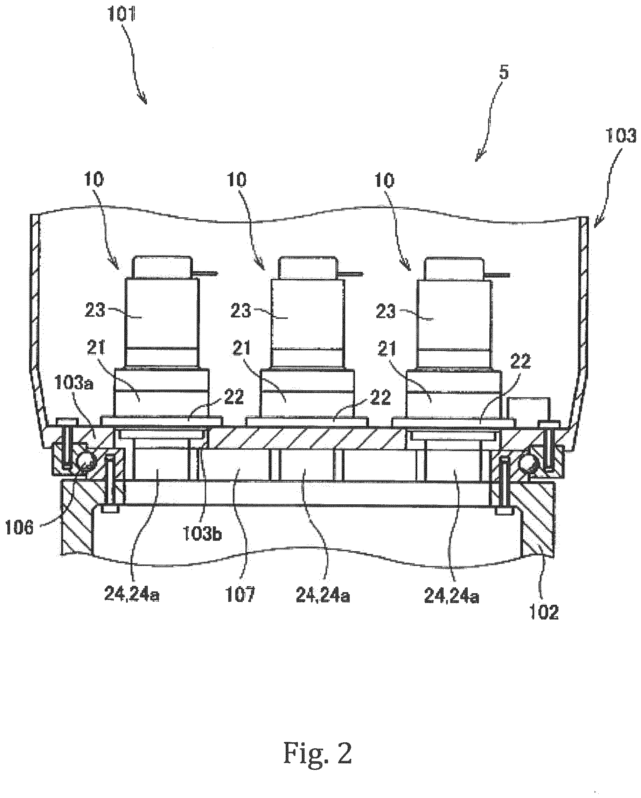

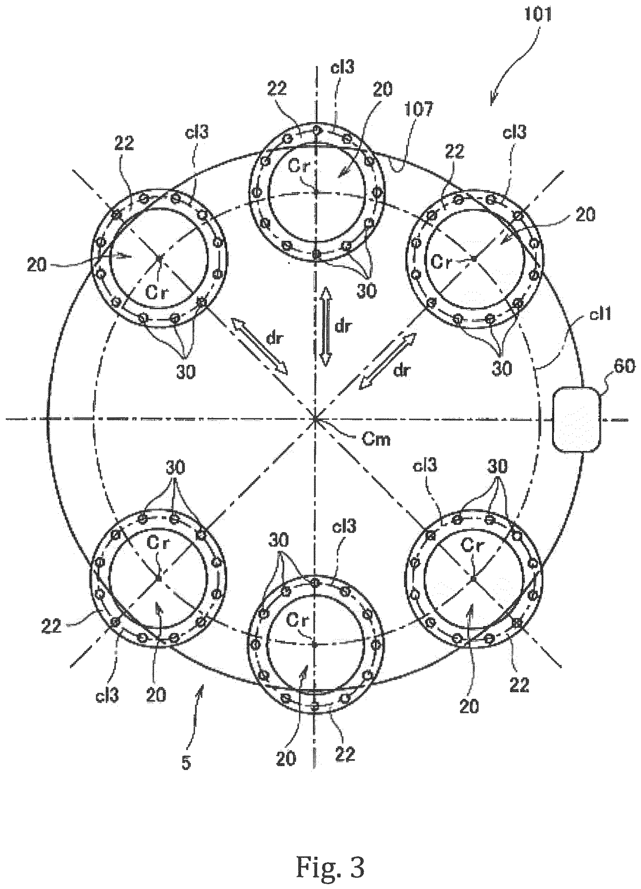

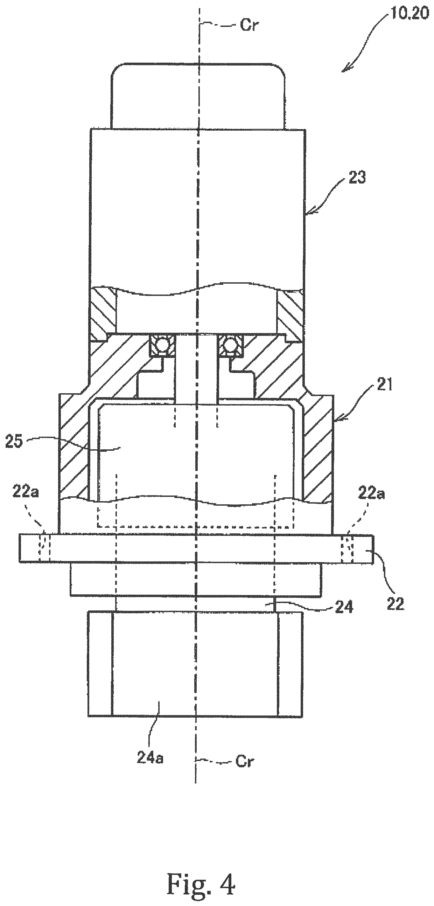

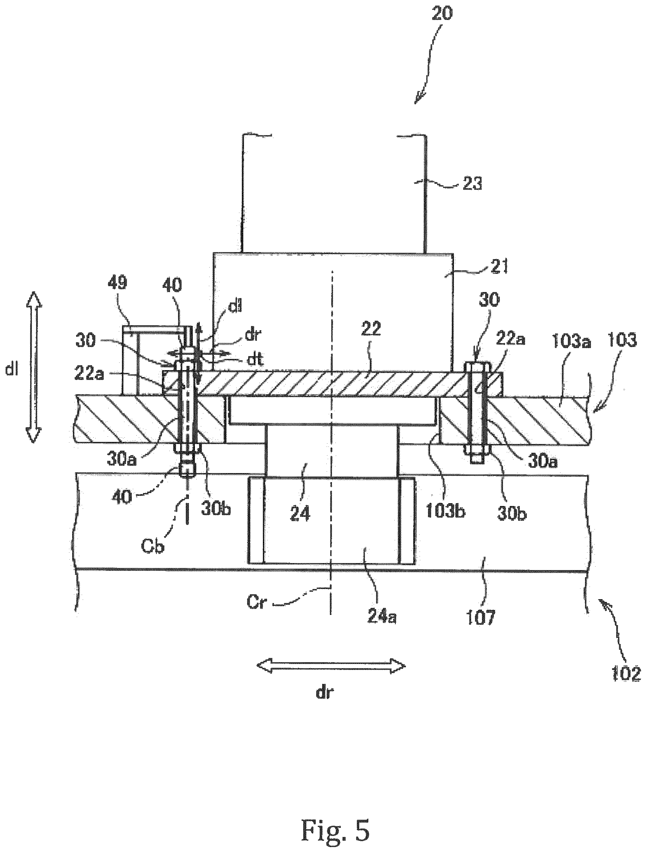

Fig. 1 is a perspective view of a wind turbine 101. Fig. 2 is a sectional view showing part of a tower 102 and a nacelle 103. In Fig. 2, as for a drive device 10, an outer appearance thereof is shown instead of a cross-section thereof. Fig. 3 is a plan view showing an arrangement of the drive devices 10 in a movable section shown in Fig. 2. Fig. 4 is a view of the drive device 10 as seen from a lateral side, part of which is shown in cross-section. Fig. 5 is a view showing an installation portion of the drive device 10, part of which is shown in cross-section.

The drive device 10 is capable of driving the nacelle 103 installed so as to be rotatable with respect to the tower 102 of the wind turbine 101 or driving a blade 105 installed so as to be swingable in a pitch direction with respect to a rotor 104 mounted to the nacelle 103. That is, the drive device 10 can be used as a yaw drive device for carrying out yaw driving so as to cause the nacelle 103 to rotate with respect to the tower 102 and also as a pitch drive device for carrying out pitch driving so as to cause a shaft portion of the blade 105 to rotate with respect to the rotor 104. While the following describes, as an example, a case where the drive device 10 is used as a yaw drive device, the present invention is applicable also to a case where the drive device 10 is used as a pitch drive device.

As shown in Fig. 1, the wind turbine 101 includes the tower 102, the nacelle 103, the rotor 104, the blade 105, and so on. The tower 102 extends upward in a vertical direction from the ground. The nacelle 103 is installed so as to be rotatable with respect to a top portion of the tower 102. Rotation of the nacelle 103 with respect to the tower 102 is yaw rotation about a longitudinal direction of the tower 102 as a rotation center. The nacelle 103 is driven by a plurality of drive devices 10 to rotate with respect to the tower 102. Inside the nacelle 103, devices necessary for wind power generation are installed. For example, a power transmission shaft, an electric power generator connected to said power transmission shaft, and so on are disposed therein. The rotor 104 is connected to the power transmission shaft and is rotatable with respect to the nacelle 103. A plurality of (in an example shown in Fig. 1, three) blades 105 are provided and extend from the rotor 104 in a radial direction about a rotation axis of said rotor 104 with respect to the nacelle 103. The plurality of blades 105 are arranged at an equal angle from each other.

The blades 105 are rotatable in the pitch direction, i.e. rotatable about a longitudinal direction thereof with respect to the rotor 104. A connection point between the blades 105 and the rotor 104 is configured as a movable section so that the blades 105 and the rotor 104 are rotatable relative to each other. The blades 105 are driven to rotate by a drive device provided as a pitch drive device. The drive device as the pitch drive device is configured similarly to an after-mentioned drive device 10 as a yaw drive device.

As shown in Fig. 2, the nacelle 103 is installed so as to be rotatable at a bottom portion 103a thereof with respect to the top portion of the tower 102 via a bearing 106. A ring gear 107 having internal teeth formed on an inner periphery thereof is fixed to the top portion of the tower 102. The ring gear 107 are not limited in terms of its teeth to the internal teeth provided on the inner periphery thereof and may have external teeth provided on an outer periphery thereof. In the drawings, the teeth of the ring gear 107 are not shown.

As shown in Fig. 2 and Fig. 3, with respect to the nacelle 103 (a first structure) and the tower 102 (a second structure) configured to rotate relative to each other, the plurality of drive devices 10 are provided in the nacelle 103. Each of the drive devices 10 includes a meshing portion 24a meshing with the teeth of the ring gear 10 provided in the tower 102. As shown in Fig. 4, each of the drive devices 10 is provided with an electric motor 23 including a motor drive portion and a motor braking portion, which will be mentioned later, and a speed reducing portion 25 receiving power transmitted from said electric motor 23 (particularly, the motor drive portion). The motor drive portion outputs rotational power, and the motor braking portion can reduce the rotational power outputted from the motor drive portion by braking the motor drive portion. The term "braking" used herein is to be broadly construed, and a definition thereof embraces retaining a stopped state of an object that has been stopped and stopping a moving object.

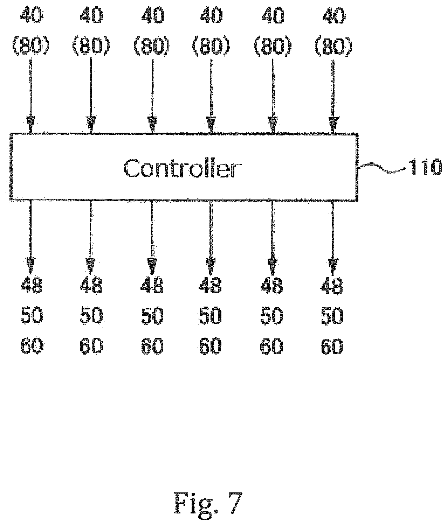

By driving the drive devices 10 thus configured, it is possible to cause the nacelle 103 (the first structure) as one of movable sections of the wind turbine 101 to rotate with respect to the tower 102 (the second structure) as the other movable section of the wind turbine 101. Particularly, the plurality of drive devices 10 included in a wind turbine drive system 5 mentioned above are operated in a synchronized manner and thus provides drive power of a magnitude sufficient to be able to cause the nacelle 103, which is a heavy object, to properly swivel with respect to the tower 102. The drive devices 10 operate based on a control signal sent from an after-mentioned controller 110 (a control unit, see Fig. 7) to the electric motor 23 (the motor drive portion and the motor braking portion).

As shown in Fig. 3, the ring gear 107 is formed in a circumferential shape and has a center axis Cm. The nacelle 103 rotates about the center axis Cm of the ring gear 107. In an example shown, the center axis Cm of the ring gear 107 agrees with the longitudinal direction of the tower 102. In the following description, a direction parallel to the center axis Cm of the ring gear 107 is simply referred to also as an "axial direction dl."

A ring gear braking portion 60 capable of braking a rotational operation of the ring gear 107 is provided in a vicinity of the ring gear 107. Under control of the after-mentioned controller 110 (the control unit, see Fig. 7), the ring gear braking portion 60 can change a magnitude of a braking force to be applied to the ring gear 107. For example, the ring gear braking portion 60 is controlled by the controller 110 to be able to switch among a mode in which no braking force is applied to the ring gear 107, a mode in which a relatively small braking force is applied to the ring gear 107, and a mode in which a relatively large braking force is applied to the ring gear 107. While there is no particular limitation on a specific configuration of the ring gear braking portion 60, typically, the ring gear braking portion 60 can adopt a caliper brake mechanism for obtaining a desired braking force by pressing a friction body against the ring gear 107, the friction body functioning as a brake shoe.

In the wind turbine 101 shown, as shown in Fig. 3, there are provided a pair of wind turbine drive systems 5 arranged in rotational symmetry about the center axis Cm of the ring gear 107. Each of the wind turbine drive systems 5 includes three drive devices 10. Six drive device bodies 20 in total included in the pair of wind turbine drive systems 5 are arranged along a circumference cl1 (see Fig. 3) about the center axis Cm of the ring gear 107. The three drive devices 10 included in each of the wind turbine drive systems 5 are arranged at given intervals along the circumference cl1.

Each of the drive devices 10 has a drive device body 20 fixed to the nacelle 103. As shown in Fig. 5, each of the drive devices 10 is fixed to the nacelle 103 (the first structure) via a fastener 30 disposed so as to extend through a through hole 22a formed through a flange 22 of the drive device body 20. Moreover, each of the drive devices 10 includes a sensor 40 (see Fig. 5) for finding any abnormality in the drive device body 20. The sensor 40 is a sensor for measuring a change in state of the fastener 30 and thus, as will be mentioned later, can indirectly detect stress (a load) between the meshing portion 24a of each of the drive devices 10 and the ring gear 107. Preferably, the sensor 40 is mounted to a location on which no other disturbance than a load between the meshing portion 24a and the ring gear 107 acts or is likely to act. Specifically, more preferably, the sensor 40 is mounted to a case 21, for example.

As shown in Fig. 4, the drive device body 20 is provided with an output shaft 24 including the meshing portion 24a meshing with the ring gear 107, the case 21 rotatably retaining the output shaft 24, and the electric motor 23 fixed to the case 21. Furthermore, the drive device body 20 is provided further with the speed reducing portion 25 housed in the case 21 and connecting the electric motor 23 to the output shaft 24. The speed reducing portion 25 decelerates an input (rotational power) from the electric motor 23 while increasing a torque thereof and transmits the input to the output shaft 24. While there is no particular limitation on a specific configuration of the speed reducing portion 25 thus described, typically, the speed reducing portion 25 can adopt an eccentric oscillating gear-type speed reducing mechanism, a planetary gear-type speed reducing mechanism, or a speed reducing mechanism obtained by combining the eccentric oscillating gear-type speed reducing mechanism with the planetary gear-type speed reducing mechanism.

An end portion of the output shaft 24 distal from the speed reducing portion 25 extends out from the case 21, and the meshing portion 24a is formed at this extending-out portion of the output shaft 24. As shown in Fig. 2 and Fig. 5, the output shaft 24 penetrates through a through hole 103b formed through the bottom portion 103a of the nacelle 103, and the meshing portion 24a meshes with the ring gear 107. The meshing portion 24a has a shape adapted to the ring gear 107. As one example, the meshing portion 24a can be formed as a pinion gear having external teeth configured to mesh with the internal teeth of the ring gear 107. Each of the drive devices 10 has a longitudinal direction axis agreeing with a rotation axis Cr of the output shaft 24. In a state where each of the drive devices 10 is fixed to the nacelle 103, the rotation axis Cr of the output shaft 24 is parallel to an axial direction dl of the wind turbine 101.

The case 21 is formed in a cylindrical shape as shown in Fig. 4 and is disposed so that a longitudinal direction axis thereof is positioned on the rotation axis Cr as shown in Fig. 5. The case 21 is open at both ends thereof along the rotation axis Cr. The meshing portion 24a of the output shaft 24 is exposed from an opening of the case 21 near the tower 102. The electric motor 23 is mounted to an opening of the case 21 on an opposite side to the tower 102. Furthermore, the case 21 includes the flange 22. As shown in Fig. 3, the flange 22 of this example is formed in an annular shape and extends along a circumference cl3 about the rotation axis Cr of the output shaft 24. As shown in Fig. 4 and Fig. 5, the through hole 22a is formed through the flange 22 so as to extend in the axial direction dl. A multitude of through holes 22a are formed on a circumference about the rotation axis Cr of the output shaft 24. In an example shown, twelve through holes 22a are formed.

The fastener 30 penetrates through the flange 22 by extending through each of the through holes 22a formed through the flange 22 of the drive device body 20. In the example shown in Fig. 5, the fastener 30 includes a bolt 30a and a nut 30b. The bolt 30a penetrates through the flange 22 of the drive device body 20 and the bottom portion 103a of the nacelle 103. The nut 30b is screwed with the bolt 30a in a direction from the nacelle 103. The fastener 30 formed of a combination of the bolt 30a and the nut 30b is provided with respect to each of the through holes 22a of the drive device body 20. In the example shown, the drive device bodies 20 are mounted to the nacelle 103 at twelve locations thereon by use of twelve fasteners 30.

The fastener 30 is not limited to the example shown and may have a configuration in which, instead of using the nut 30b, a female screw with which a male screw of the bolt 30a can be screwed is formed in a through hole of the nacelle 103. In this case, the fastener 30 is formed of the bolt 30a, and the male screw of the bolt 30a meshes with the female screw in the through hole of the nacelle 103, thus making it possible to fix the drive device body 20 to the nacelle 103.

The sensor 40 measures a change in state of the fastener 30 and thus can directly or indirectly measure an amount of a force acting on the fastener 30. Specifically, the sensor 40 may be formed of a known sensor for measuring one or more of a weight applied to the fastener 30, a displacement of the fastener 30 with respect to the nacelle 103, and a relative position of the fastener 30 to the nacelle 103. In the example shown, an axial force sensor is used as the sensor 40, and thus it is possible to measure a weight (an axial force) toward a particular direction applied to the fastener 30. As another example, a magnetic sensor or a photoelectric sensor is used as the sensor 40, and thus it becomes possible to measure a position and a displacement of the fastener 30 in a non-contact manner.

As shown in Fig. 5, the sensor 40 is fixedly retained by use of a jig 49 with respect to the nacelle 103, which is one of the movable sections. The axial force sensor constituting the sensor 40 contacts with a head portion of the bolt 30a as a component of the fastener 30. There is, however, no limitation to this example. As shown by a chain double-dashed line in Fig. 5, the sensor 40 may contact with a distal end portion of the bolt 30a on an opposite side to the head portion or may contact with the nut 30b. Furthermore, the sensor 40 may detect a load applied to a fastening bolt fastening the nacelle 103 to the case 21.

The sensor 40 is electrically connected to the after-mentioned controller 110 (see Fig. 7), and an electric signal related to a result of measurement outputted from the sensor 40 is transmitted to the controller 110. The controller 110 monitors an electric signal outputted from the sensor 40, and thus it becomes possible to grasp a change in weight applied to the fastener 30 and a displacement of the fastener 30. Based on a result of measurement by the sensor 40, the controller 110 can control the various types of constituent elements of the wind turbine 101, such as the drive devices 10.

Next, a description is given of the electric motor 23 (the motor drive portion and the motor braking portion).

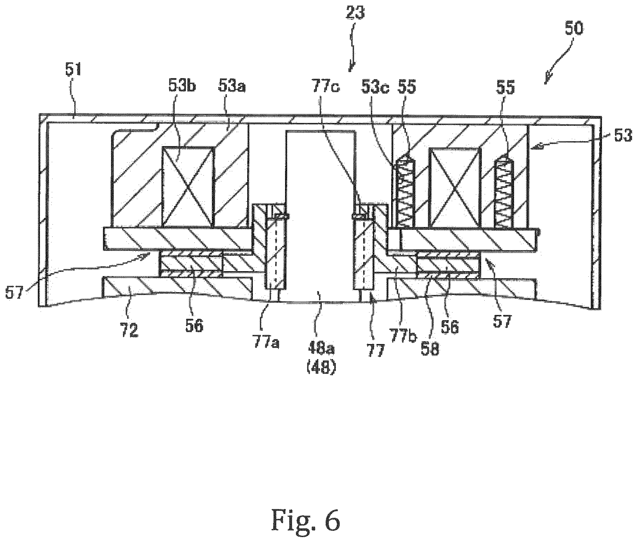

Fig. 6 is a view schematically showing a partial cross-section of the electric motor 23.

The electric motor 23 provided with a motor drive portion 48 and a motor braking portion 50 is provided in each of the drive devices 10, and one motor braking portion 50 is mounted to each motor drive portion 48. The motor drive portion 48 can be formed of any motor device capable of controlling, based on a command from the controller 110 (see Fig. 7), the number of rotations of a drive shaft 48a. The motor braking portion 50 includes a mechanism as an electromagnetic brake for, based on a command from the controller 110 (see Fig. 7), braking rotation of the drive shaft 48a of the motor drive portion 48 or releasing the drive shaft 48a from being braked. In a state where rotation of the drive shaft 48a is braked, the number of rotations of the drive shaft 48a is reduced, and thus eventually, the drive shaft 48a can be completely stopped from rotating. On the other hand, in a state where the drive shaft 48a is released from being braked, without being braked by the motor braking portion 50, the drive shaft 48a can rotate basically at an original number of rotations corresponding to electric power supplied to the motor drive portion 48. Rotational power from the drive shaft 48a of the motor drive portion 48 is transmitted to the output shaft 24 via the speed reducing portion 25. While the foregoing has described a method for reducing variation in load between the meshing portion 24a of each of the drive devices and the ring gear 107 by controlling the number of rotations of the drive shaft 48a of the motor drive portion 48, there is no limitation to the above-described method. For example, it is also possible to reduce variation in load between the meshing portion 24a of each of the drive devices and the ring gear 107 by controlling a torque of the drive shaft 48a of the motor drive portion 48. While there is no particular limitation on such a method for controlling the number of rotations or a torque of the drive shaft 48a of the motor drive portion 48, for example, it is possible to control the number of rotations or a torque of the drive shaft 48a by adjusting at least one of a voltage applied to the motor drive portion 48 and an electric current supplied to the motor drive portion 48.

The motor braking portion 50 of this example is mounted to an end portion of a cover 72 of the motor drive portion 48 on an opposite side to the speed reducing portion 25 and includes a housing 51, a friction plate 56, an armature 57, an elastic member 55, an electromagnet 53, a first friction plate connecting portion 77, and so on.

The housing 51 is a structure housing the friction plate 56, the armature 57, the elastic member 55, the electromagnet 53, the first friction plate connecting portion 77, and so on and is fixed to the cover 72 of the motor drive portion 48.

The friction plate 56 is connected to the drive shaft 48a of the motor drive portion 48 via the first friction plate connecting portion 77. In a through hole of the friction plate 56, the drive shaft 48a is disposed in a state where one end portion thereof penetrates through the through hole.

The first friction plate connecting portion 77 of this example includes a spline shaft 77a and a slide shaft 77b. The spline shaft 77a is fixed to an outer periphery of the one end portion of the drive shaft 48a through key coupling via a key member (not shown) and engagement with a stopper ring 77c. The slide shaft 77b is mounted to the spline shaft 77a so as to be slidable in an axial direction. Furthermore, in the first friction plate connecting portion 77, there is provided a spring mechanism (not shown) for situating the slide shaft 77b at a predetermined position in the axial direction with respect to the spline shaft 77a. An inner periphery of the friction plate 56 is fixed to an edge portion of an outer periphery of a flange-shaped portion of the slide shaft 77b, so that the friction plate 56 is coupled integrally with the slide shaft 77b.

In the motor braking portion 50 having the above-described configuration, when the drive shaft 48a rotates, the spline shaft 77a, the slide shaft 77b, and the friction plate 56 also rotate together with the drive shaft 48a. In a state where the after-mentioned electromagnet 53 is excited, the slide shaft 77b and the friction plate 56 that are retained so as to be slidable in the axial direction with respect to the drive shaft 48a and the spline shaft 77a are situated at a predetermined position in the axial direction of the spline shaft 77a by the spring mechanism. When disposed at this predetermined position, the friction plate 56 is separated from the armature 57 and a friction plate 58, which will be mentioned later.

The armature 57 is provided so as to be contactable with the friction plate 56. The armature 57 is provided as a member for generating a braking force for braking rotation of the drive shaft 48a by contacting with the friction plate 56.

Furthermore, in this example, the friction plate 58 is provided at a location on one end portion of the cover 72 of the motor drive portion 48, where the friction plate 58 is opposed to the friction plate 56. The friction plate 58 is installed at such a position as to be contactable with the friction plate 56.

The elastic member 55 is retained in an electromagnetic body 53a of the electromagnet 53, which will be mentioned later, and biases the armature 57 in a direction from the electromagnet 53 toward the friction plate 56. Particularly, as a plurality of elastic members 55 of this example, in the electromagnetic body 53a, two inner peripheral and outer peripheral elastic members 55 are arranged in a circumferential direction concentrically about the drive shaft 48a. The above-mentioned form of arranging the elastic members 55 is merely an example, and the elastic members 55 may be arranged in any other form.

The electromagnet 53 includes the electromagnetic body 53a and a coil portion 53b and attracts the armature 57 by a magnetic force so as to separate the armature 57 from the friction plate 56.

To the housing 51, the electromagnetic body 53a is fixed at an end portion thereof on an opposite side to where the electromagnetic body 53a is opposed to the armature 57. The electromagnetic body 53a has a plurality of elastic member retaining holes 53c open toward the armature 57, and the elastic members 55 are disposed in the elastic member retaining holes 53c, respectively.

The coil portion 53b is installed inside the electromagnetic body 53a and disposed along the circumferential direction of the electromagnetic body 53a. Supplying and shutting off of an electric current to the coil portion 53b is performed based on a command of the controller 110.

For example, when the motor braking portion 50 releases the drive shaft 48a from being braked, based on a command of the controller 110, an electric current is supplied to the coil portion 53b to energize the electromagnet 53. When the electromagnet 53 is energized and thus is brought into an exited state, the armature 57 is attracted to the coil portion 53b by a magnetic force generated at the electromagnet 53. At this time, the armature 57 is attracted to the electromagnet 53 against an elastic force (a spring force) of the plurality of elastic members 55. With this configuration, the armature 57 is separated from the friction plate 56, and thus the drive shaft 48a is released from being braked. Accordingly, in a state where the electromagnet 53 is excited and thus the drive shaft 48a is released from being braked, the armature 57 is brought into a state of contacting with the electromagnetic body 53a.

On the other hand, when the motor braking portion 50 brakes the drive shaft 48a, based on a command of the controller 110, a supply of an electric current to the coil portion 53b is shut off to demagnetize the electromagnet 53. When the electromagnet 53 is brought into a demagnetized state, the armature 57 is biased toward the friction plate 56 by an elastic force of the plurality of elastic members 55, and thus the armature 57 contacts with the friction plate 56. With this configuration, a friction force is generated between the armature 57 and the friction plate 56, and thus rotation of the drive shaft 48a is braked. Fig. 6 shows a state where the electromagnet 53 is demagnetized, which is a state where rotation of the drive shaft 48a is braked.

Furthermore, in a state where the electromagnet 53 is demagnetized and thus the drive shaft 48a is braked, the friction plate 56 is in contact also with the friction plate 58 under a biasing force acting from the armature 57. Accordingly, when the electromagnet 53 is demagnetized, the friction plate 56 is brought into a state of being sandwiched between the armature 57 and the friction plate 58 under a biasing force from the plurality of elastic members 55. With this configuration, by a friction force generated between the armature 57 and the friction plate 56 and a friction force generated between the friction plate 56 and the friction plate 58, rotation of the drive shaft 48a is braked to an extremely high degree.

<Control for Suppressing Load Acting on Ring Gear> Next, a description is given of one example of a control method for suppressing a load applied to the ring gear 107 and each of the drive devices 10.

Fig. 7 is a block diagram for explaining a functional configuration of the controller 110. In this example, the above-mentioned sensor 40 is used as a state quantity detection portion (a state quantity detection unit) 80. The controller 110 is capable of receiving a result of detection from each of the sensors 40 provided in the plurality of drive devices 10 (in this example, six drive devices 10), respectively, and outputting a control signal for controlling the motor drive portion 48 and the motor braking portion 50 provided in each of the drive devices 10 and a control signal for controlling the ring gear braking portion 60. There is no particular limitation on an installation position of the controller 110. The controller 110 may be provided integrally with any of the elements constituting the wind turbine 101 (for example, the tower 102, the nacelle 103, the rotor 104, or the blade 105) or independently of these elements.

In this embodiment, by the state quantity detection portion 80, information corresponding to stress (a load) between the meshing portion 24a of each of the plurality of drive devices 10 and the ring gear 107 is detected for the each of the drive devices 10. Based on the load for the each of the drive devices 10 detected by the state quantity detection portion 80, the controller 110 controls at least one of the motor drive portion 48, the motor braking portion 50, and the ring gear braking portion 60. That is, the controller 110 can perform a first control process of controlling the motor drive portion 48 of each of the drive devices 10 to prevent an increase in degree of variation in load between the meshing portion 24a and the ring gear 107 among the drive devices 10. The controller 110 can also perform a second control process of controlling the ring gear braking portion 60 to increase or decrease a braking force to be applied from the ring gear braking portion 60 to the ring gear 107. Also by the second braking process, it is possible to prevent an increase in degree of variation in load between the meshing portion 24a and the ring gear 107 among the drive devices 10. As will be mentioned later, in a case where, based on a result of detection by the state quantity detection portion 80, a degree of variation in load among the drive devices 10 is outside a permissible range, the controller 110 performs at least one of the first control process and the second control process.

The state quantity detection portion 80 is provided in each of the drive devices 10 and directly or indirectly detects a load between the meshing portion 24a of a corresponding one of the drive devices 10 and the ring gear 107. The state quantity detection portion 80 can be formed of any sensor. In this example, the above-mentioned sensor 40 functions as the state quantity detection portion 80. That is, an amount of a force acting on the fastener 30 is measured by the sensor 40 (the state quantity detection portion 80) so as to detect a "load between the meshing portion 24a and the ring gear 107,"and a result of the detection is sent from each of the sensors 40 to the controller 110.

The state quantity detection portion 80 is not limited to the sensor 40 for detecting a state quantity of the fastener 30 and can be formed of any type of sensor capable of detecting any state quantity varying depending on a magnitude of a "load between the meshing portion 24a and the ring gear 107." For example, a sensor capable of measuring an amount of a force acting on the speed reducing portion 25 (for example, a sensor for detecting a distortion generated in the speed reducing portion 25) can be installed in the speed reducing portion 25 of each of the drive devices 10 and used as the state quantity detection portion 80 to detect a "load between the meshing portion 24a and the ring gear 107."

The controller 110, on the other hand, is capable of controlling the motor drive portion 48 (the above-mentioned first control process) and controlling the ring gear braking portion 60 (the above-mentioned second control process) by any method. For example, in the above-mentioned first control process, the controller 110 can prevent an increase in degree of variation in load among the plurality of drive devices 10 by adjusting rotation or a torque of the motor drive portion 48 of each of the plurality of drive devices 10. Specifically, it is possible to prevent an increase in degree of variation in load among the plurality of drive devices 10 by adjusting rotation or a torque of the motor drive portion 48 of each of the drive devices 10 so as to reduce a load between the meshing portion 24a and the ring gear 107. Furthermore, it is possible that, in a drive device 10 among the plurality of drive devices 10, for which a load between the meshing portion 24 and the ring gear 107 is relatively small, the motor drive portion 48 is caused to rotate so as to increase said load. With this configuration, in a drive device 10 among the plurality of drive devices 10, for which the load between the meshing portion 24a and the ring gear 107 is relatively large, the load is alleviated, and thus it is also possible to prevent an increase in degree of variation in the load among the plurality of drive devices 10. In performing the first control process thus described, preferably, the controller 110 controls not only the motor drive portion 48 but also the motor braking portion 50 so as to adjust a rotational state of the motor drive portion 48. That is, in causing the motor drive portion 48 (namely, the drive shaft 48a) to rotate, preferably, a braking force applied from the motor braking portion 50 to the drive shaft 48a is reduced or set to zero (0).

Furthermore, in the above-mentioned second control process, the controller 110 controls the ring gear braking portion 60 to increase or decrease a braking force to be applied from the ring gear braking portion 60 to the ring gear 107. By increasing or decreasing a braking force from the ring gear braking portion 60 in this manner, while a proportion of a burden upon the ring gear braking portion 60 in terms of braking the ring gear 107 is increased or decreased, a load for each of the drive devices 10 is alleviated or increased. As a result, it is possible to prevent an increase in degree of variation in the load among the drive devices 10. The controller 110 may perform only one of the first control process and the second control process, which are mentioned above, or may perform the first control process while performing the second control process. For example, it is possible that, after one of the first control process and the second control process is executed and completed, the other is executed, or the first control process and the second control process are executed concurrently with each other.

An "adjustment of rotation or a torque of the motor drive portion 48" and an "adjustment of a braking force applied by the ring gear braking portion 60"described herein can be performed by any method. For example, the controller 110 controls energization with respect to the motor drive portion 48 and the ring gear braking portion 60 so as to perform these adjustments.

As mentioned above, while there is variation in size of a backlash (a gap) between the meshing portion 24a of each of the drive devices 10 and the ring gear 107, a "load between the meshing portion 24a and the ring gear 107" varies depending on a size of the backlash. For example, in a case where the backlash is relatively small and thus the meshing portion 24a is pressed relatively strongly against the ring gear 107, the "load between the meshing portion 24a and the ring gear 107" tends to be increased. On the other hand, in a case where the backlash is relatively large and thus the meshing portion 24a is pressed relatively weakly against the ring gear 107, the "load between the meshing portion 24a and the ring gear 107" tends to be decreased. Accordingly, when the backlash between the meshing portion 24a and the ring gear 107 is equal in size among the plurality of drive devices 10, the "load between the meshing portion 24a and the ring gear 107" is also equal among the plurality of drive devices 10. In reality, however, the backlash can hardly be completely equal in size among the plurality of drive devices 10, and the "load among the meshing portion 24a and the ring gear 107" varies among the drive devices 10. Such variation in load may occur not only while the ring gear 107 is being driven by the plurality of drive devices 10 but also while the ring gear 107 has been stopped from rotating under a braking force applied to the motor drive portion 48 by the motor braking portion 50.

With these as a background, rotation or a torque of the drive shaft 48a of the motor drive portion 48 of each of the drive devices 10 is adjusted so as to make an adjustment for different sizes of the backlash between each of the meshing portions 24a and the ring gear 107, and thus it is possible to reduce a degree of variation in load among the drive devices 10. For example, preferably, for a drive device 10 among the plurality of drive devices 10, for which a "load between the meshing portion 24a and the ring gear 107" is relatively larger than that for the other drive devices 10, the drive shaft 48a is caused to rotate so as to separate the teeth of the meshing portion 24a from the teeth of the ring gear 107. On the other hand, for a drive device 10 among the plurality of drive devices 10, for which a "load between the meshing portion 24a and the ring gear 107"is relatively smaller than that for the other drive devices 10, the drive shaft 48a and the meshing portion 24a may be caused to rotate so as to bring the teeth of the meshing portion 24a in close proximity to the teeth of the ring gear 107. With this configuration, the backlash between each of the meshing portions 24a and the ring gear 107 can be made uniform in size.

More specifically, in a case of performing the above-mentioned first control process, the controller 110 can control the motor drive portion 48 and the motor braking portion 50 in a drive device 10 for which a "load between the meshing portion 24a and the ring gear 107"is largest among the plurality of drive devices 10 and/or a drive device 10 for which the "load between the meshing portion 24a and the ring gear 107"is smallest among the plurality of drive devices 10. For example, the controller 110 may control the motor drive portion 48 in a drive device 10 for which a "load between the meshing portion 24a and the ring gear 107" is largest among the plurality of drive devices 10 to reduce said load, thus performing the above-mentioned first control process. Furthermore, the controller 110 may control the motor drive portion 48 in a drive device 10 for which the "load between the meshing portion 24a and the ring gear 107" is smallest among the plurality of drive devices 10 to increase said load, thus performing the above-mentioned first control process.

Next, a description is given of an example of a control process flow for suppressing an increase in load applied to the ring gear 107 and each of the drive devices 10.

The description is directed first to a control process flow in a case of suppressing an increase in load by the above-mentioned first control process.

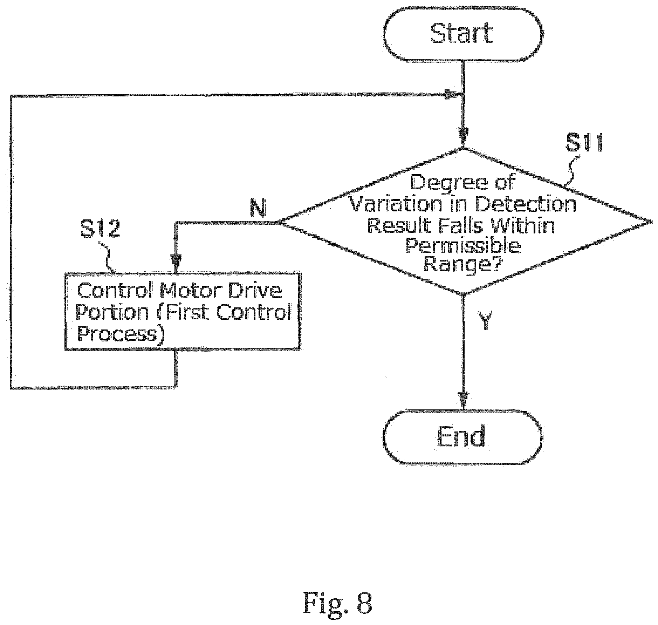

Fig. 8 is a view showing one example of a control process flow. The control process flow of this example is performed in a state where the ring gear 107 is not driven to rotate, and a braking force is applied to the ring gear 107. The braking force applied to the ring gear 107 in this case may be a braking force directly applied to the ring gear 107 by the ring gear braking portion 60, a braking force indirectly applied to the ring gear 107 from the motor braking portion 50 via the motor drive portion 48 and the speed reducing portion 25 in each of the drive devices 10, or a braking force applied from both of the ring gear braking portion 60 and the motor braking portion 50 of each of the drive devices 10.

First, the controller 110 evaluates a degree of variation in result of detection by the state quantity detection portions 80 (in this example, the sensors 40) and determines whether or not said degree of variation falls within a predetermined permissible range (S11 in Fig. 8).

There is no particular limitation on a specific method for evaluating a degree of variation in result of detection by the state quantity detection portions 80. Typically, in a case where a difference between a maximum value and a minimum value of detection values obtained by the state quantity detection portions 80 among the drive devices 10 is smaller than a predetermined value, it can be evaluated that the "degree of variation in result of detection by the state quantity detection portions 80 falls within a permissible range," and in a case where said difference is equal to or more than the predetermined value, it can be evaluated that the "degree of variation in result of detection by the state quantity detection portions 80 is outside the permissible range." Furthermore, an average value or a median value of detection values obtained by the state quantity detection portions 80 is determined, and a difference between the average value or the median value and each of the detection values of the state quantity detection portions 80 is determined. In a case where said difference is smaller than a predetermined value, it can be evaluated that the "degree of variation in result of detection by the state quantity detection portions 80 falls within a permissible range," and in a case where said difference is equal to or more than the predetermined value, it can be evaluated that the "degree of variation in result of detection by the state quantity detection portions 80 is outside the permissible range." Furthermore, a degree of variation in result of detection by the state quantity detection portions 80 can be evaluated based on any other method.

Furthermore, the "permissible range" described herein can be set as appropriate in accordance with a specific device configuration and can be individually defined based on a such a state quantity as to be able to effectively avoid trouble such as a breakage of the drive devices 10 or the ring gear 107.

Further, in a case where the "degree of variation in load between the meshing portion 24a and the ring gear 107 among the plurality of drive devices 10," namely, the "degree of variation in result of detection by the state quantity detection portions 80 among the plurality of drive devices 10" falls within the permissible range (Y at S11), the controller 110 does not perform a process of preventing an increase in degree of variation in load among the plurality of drive devices 10.

On the other hand, in a case where the "degree of variation in load between the meshing portion 24a and the ring gear 107 among the plurality of drive devices 10," namely, the "degree of variation in result of detection by the state quantity detection portions 80 among the plurality of drive devices 10" is determined to be outside the permissible range (N at S11), the controller 110 reduces the degree of variation in load among the plurality of drive devices 10 by controlling, in each of the plurality of drive devices 10, the motor drive portion 48 to adjust rotation or a torque of the drive shaft 48a so as to adjust a relative position (namely, the backlash) of the meshing portion 24a with respect to the teeth of the ring gear 107 (S12). In executing the process step S12, a braking force applied from the motor braking portion 50 to the motor drive portion 48 (particularly, the drive shaft 48a) is reduced or cancelled. In a case where a braking force is applied to the ring gear 107 by the ring gear braking portion 60, in executing the above-mentioned process step S12, the braking force applied from the ring gear braking portion 60 to the ring gear 107 may be reduced, cancelled, or maintained.

The process step S12 of controlling rotation or a torque of the motor drive portion 48 is continued while the "degree of variation in result of detection by the state quantity detection portions 80 among the drive devices 10" keeps deviating from the permissible range. Further, through the above-mentioned process step S12, the degree of variation in result of detection by the state quantity detection portions 80 among the drive devices 10 is adjusted so as to fall within the permissible range (Y at S11), after which the controller 110 may control the ring gear braking portion 60 and/or the motor braking portion 50 of each of the plurality of drive devices to increase a braking force applied to the ring gear 107.

The description is directed next to a control process flow in a case of suppressing an increase in load by the above-mentioned second control process.

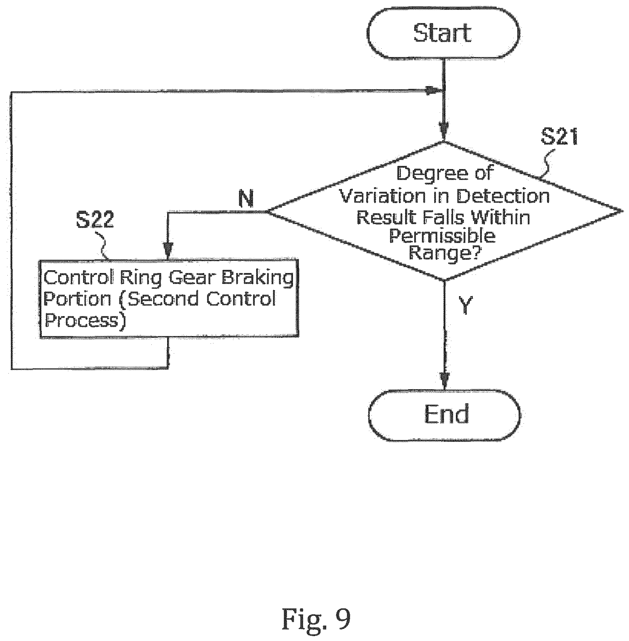

Fig. 9 is a view showing another example of the control process flow. Also in this example, similarly to the above-mentioned step S11 shown in Fig. 8, the controller 110 evaluates a degree of variation in result of detection by the state quantity detection portions 80 (in this example, the sensors 40) and determines whether or not said degree of variation falls within a predetermined permissible range (S21 in Fig. 9).

In a case where the "degree of variation in result of detection by the state quantity detection portions 80 among the plurality of drive devices 10"is determined to fall within the permissible range (Y at S21), the controller 110 does not perform a process of preventing an increase in degree of variation in load among the plurality of drive devices 10.

On the other hand, in a case where the "degree of variation in result of detection by the state quantity detection portions 80 among the plurality of drive devices 10" is determined to be outside the permissible range (N at S21), the controller 110 increases or decreases a braking force applied from the ring gear braking portion 60 to the ring gear 107 by controlling the ring gear braking portion 60 to adjust the braking force (S22). In a case where a braking force is applied from the motor braking portion 50 to the ring gear 107 via the motor drive portion 48 and the speed reducing portion 25, in executing the process step S22, the braking force applied from the motor braking portion 50 to the ring gear 107 may be reduced, cancelled, or maintained.

The process step S22 of controlling a braking force applied by the ring gear braking portion 60 is continued while the "degree of variation in result of detection by the state quantity detection portions 80 among the drive devices 10" keeps deviating from the permissible range. Further, through the above-mentioned process step S22, the degree of variation in result of detection by the state quantity detection portions 80 among the drive devices 10 is adjusted so as to fall within the permissible range (Y at S21), after which the braking force applied from the ring gear braking portion 60 to the ring gear 107 may be reduced and returned to a magnitude before execution of the above-mentioned process step S22.

While the foregoing has described an example in which only one of the first control process (see Fig. 8) and the second control process (see Fig. 9) is performed, it is also possible that both of the first control process and the second control process are performed. That is, in a case where the "degree of variation in result of detection by the state quantity detection portions 80 among the plurality of drive devices 10" is determined to be outside the permissible range (see N at S11 in Fig. 8 and N at S21 in Fig. 9), the controller 110 can perform the first control process and the second control process by controlling the motor drive portion 48 and the ring gear braking portion 60.

In this case, there is no particular limitation on timing at which each of the first control process and the second control process is performed. For example, it is possible that the first control process is performed first to adjust a state of rotation or a torque of the drive shaft 48a of the motor drive portion 48 so as to reduce a "load between the meshing portion 24a and the ring gear 107,"after which the second control process is performed to increase or decrease a braking force applied from the ring gear braking portion 60 to the ring gear 107. Furthermore, it is also possible that in a state where the second control process is performed to increase or decrease a braking force applied from the ring gear braking portion 60 to the ring gear 107, the first control process is performed to adjust a state of rotation or a torque of the drive shaft 48a of the motor drive portion 48 so as to reduce a "load between the meshing portion 24a and the ring gear 107."

As described above, according to the above-mentioned control process flows shown in Fig. 8 and Fig. 9, an increase in variation in "load between the meshing portion 24a and the ring gear 107" among the drive devices 10 is prevented. With this configuration, it is possible to prevent an excessive load from locally acting on each of the drive devices 10 and the ring gear 107 before that happens and thus to effectively avoid trouble such as a breakage of the drive devices 10 or the ring gear 107. Particularly, by the first control process, a state of rotation or a torque of the drive shaft 48a is adjusted, and thus a degree of variation in load between the meshing portion 24a and the ring gear 107 among the drive devices 10 is reduced, so that a backlash between each of the meshing portions 24a and the ring gear 107 is made uniform in size. Thus, a load burden can be shared in a balanced manner among the plurality of drive devices 10.

The above-mentioned control process flows shown in Fig. 8 and Fig. 9 are intended to prevent an increase in variation in load between the meshing portion 24a and the ring gear 107 among the drive devices 10 and may be implemented in combination with any other process flow. For example, in a case where a load between the meshing portion 24a and the ring gear 107 becomes excessive in one or plural ones of the drive devices 10, which might lead to trouble such as a breakage of the various elements constituting each of the drive devices 10 or the ring gear 107, preferably, a process capable of more effectively preventing such trouble is preferentially implemented.

The following describes an example of a process flow effective in preventing trouble such as a breakage of the various elements constituting each of the drive devices 10 or the ring gear 107.

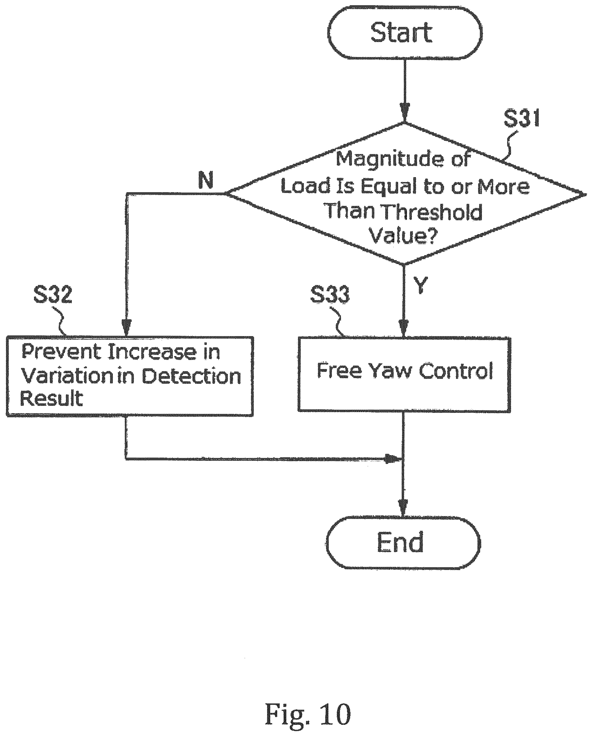

Fig. 10 is a view showing an application example of the control process flows shown in Fig. 8 and Fig. 9. In a control process flow of this example, based on a magnitude of a load for each of the drive devices 10 detected by the state quantity detection portion 80 (in this example, the sensor 40), the controller 110 determines whether or not to control the motor drive portion 48 of each of the plurality of drive devices and/or the ring gear braking portion 60 to prevent an increase in degree of variation in said load among the drive devices 10, i.e., whether or not to perform the first control process and/or the second control process.

That is, based on a result of detection by the state quantity detection portion 80, the controller 110 first determines whether or not a "load between the meshing portion 24a and the ring gear 107" in each of the controllers 110 is equal to or more than a predetermined threshold value (S31 in Fig. 10). For example, a detection value (hereinafter, referred to also as a "determination threshold value") of the state quantity detection portion 80 in a case where the "load between the meshing portion 24a and the ring gear 107" is equal to or more than the predetermined threshold value is preset, and the determination at said process step S31 can be performed based on whether or not a detection value of the state quantity detection portion 80 is equal to or more than this determination threshold value.

There is no particular limitation on a specific determination method used at the process step S31, and any method effective in preventing trouble such as a breakage can be adopted in accordance with a specific device configuration. For example, it is possible that in a case where a load between the meshing portion 24a and the ring gear 107 is equal to or more than the predetermined threshold value (i.e., in a case where the state quantity detection portion 80 exhibits a value equal to or more than the determination threshold value) in at least one or more of the plurality of drive devices 10, at the process step S31, it is recognized that the "load between the meshing portion 24a and the ring gear 107" is equal to or more than the predetermined threshold value. Furthermore, it is also possible that only in a case where a load between the meshing portion 24a and the ring gear 107 is equal to or more than the predetermined threshold value in predetermined plural ones (for example, a half of all the drive devices 10 (in this example, three)) or more of the plurality of drive devices 10, at the process step S31, it is recognized that the "load between the meshing portion 24a and the ring gear 107" is equal to or more than the predetermined threshold value.

In a case where, at the above-mentioned process step S31, it is determined that the "load between the meshing portion 24a and the ring gear 107" is not equal to or more than the predetermined threshold value (N at S31), a process of preventing an increase in variation in load between the meshing portion 24a and the ring gear 107, namely, an increase in variation in result of detection by the state quantity detection portions 80 is performed (S32). The process of preventing an increase in variation in result of detection by the state quantity detection portions 80 can be implemented by following, for example, the above-mentioned control process flow shown in Fig. 8 or the above-mentioned control process flow shown in Fig. 9.

On the other hand, in a case where, at the above-mentioned process step S31, it is determined that the "load between the meshing portion 24a and the ring gear 107" is equal to or more than the predetermined threshold value in all the drive devices 10 (Y at S31), the process for preventing an increase in variation in result of detection by the state quantity detection portions 80 (see Fig. 8 and Fig. 9) is not performed, and the controller 110 performs free yaw control (S33).

In the free yaw control, free relative rotation between the nacelle 103 (the first structure) and the tower 102 (the second structure) is permitted, and a braking force and a drive force that might inhibit the free relative rotation between the nacelle 103 and the tower 102 are reduced or cancelled. In a case where the motor drive portion 48 and the motor braking portion 50 as mentioned above are provided, the controller 110 shuts off energization with respect to the motor drive portion 48 so as to stop the drive shaft 48a from rotating and also controls energization with respect to the motor braking portion 50 so that a braking force is not applied from the motor braking portion 50 to the motor drive portion 48 (namely, the drive shaft 48a). Furthermore, the controller 110 controls the ring gear braking portion 60 so that a braking force is not applied from the ring gear braking portion 60 to the ring gear 107. Furthermore, in a case where any other drive unit and any other braking unit are provided, the controller 110 controls the any other drive unit and the any other braking unit to eliminate a braking force and a drive force that might inhibit free relative rotation between the nacelle 103 and the tower 102.

With the controller 110 performing the above-mentioned free yaw control, the meshing portion 24a of each of the drive devices 10 and the ring gear 107 are placed in a freely rotatable state, and thus the nacelle 103 can freely rotate with respect to the tower 102. Such free rotation can effectively prevent a load between each of the meshing portions 24a and the ring gear 107 from becoming excessive, and thus trouble such as a breakage of the various elements constituting each of the drive devices 10 or the ring gear 107 can be avoided before it happens.

As described above, according to the control process flow shown in Fig. 10, the "process intended to prevent an increase in variation in load between the meshing portion 24a and the ring gear 107 among the drive devices 10 (see Fig. 8 and Fig. 9)" and the "process effective in preventing trouble such as a breakage of the various elements constituting each of the drive devices 10 or the ring gear 107 (free yaw control)" can be implemented in a balanced manner.

The present invention is not limited to the above embodiment and modification examples but may include various aspects modified variously as could be conceived by those skilled in the art, and the effects produced by the present invention are also not limited to those described above. Accordingly, addition, modification, and partial deletion of the elements recited in the claims or described in the specification can be variously made within the technical idea and the purport of the present invention.

For example, while in the above-mentioned control process flow shown in Fig. 10, whether or not to perform free yaw control (see S33 in Fig. 10) is determined based on a result of detection by the state quantity detection portion 80, whether or not to perform free yaw control may also be determined based on any other factor than a result of detection by the state quantity detection portion 80. For example, it is possible that an anemometer (not shown) for measuring a velocity of a wind blowing to the wind turbine 101 is separately provided beforehand, and based on a result of measurement by said anemometer, the controller 110 determines whether or not to perform free yaw control. In this case, for example, when a result of measurement by the anemometer is equal to or more than a predetermined wind velocity threshold value, the controller 110 may determine to perform free yaw control. On the other hand, when a result of measurement by the anemometer is smaller than the predetermined wind velocity threshold value, the controller 110 may determine not to perform free yaw control and perform the process of reducing variation in load between the meshing portion 24a and the ring gear 107, namely, variation in result of detection by the state quantity detection portions 80 (see Fig. 8 and Fig. 9).

### LIST OF REFERENCE NUMBERS

- 5: wind turbine drive system
- 10: drive device
- 20: drive device body
- 21: case
- 22: flange
- 22a: through hole
- 23: electric motor
- 24a: meshing portion
- 24: output shaft
- 25: speed reducing portion
- 30: fastener
- 30a: bolt
- 30b: nut
- 40: sensor
- 48: motor drive portion
- 48a: drive shaft
- 49: jig
- 50: motor braking portion
- 51: housing
- 53: electromagnet
- 53a: electromagnetic body
- 53b: coil portion
- 53c: elastic member retaining hole
- 55: elastic member
- 56: friction plate
- 57: armature
- 58: friction plate
- 60: ring gear braking portion
- 72: cover
- 77: first friction plate connecting portion
- 77a: spline shaft
- 77b: slide shaft
- 77c: stopper ring
- 80: state quantity detection portion
- 101: wind turbine
- 102: tower
- 103: nacelle
- 103a: bottom portion
- 103b: through hole
- 104: rotor
- 105: blade
- 106: bearing
- 107: ring gear
- 110: controller

## Claims

1. A wind turbine drive system (5), comprising:
a plurality of drive devices (10) provided in a first structure (103) and including a meshing portion meshing (24a) with a ring gear (107) provided in a second structure (102), the first structure (103) and the second structure (102) being configured to rotate relative to each other,
wherein each of the plurality of drive devices (10) including:
a motor drive portion (48) for outputting power; and
a speed reducing portion (25) for receiving the power transmitted from the motor drive portion (48);
a ring gear braking portion (60) for braking the ring gear (107);
a state quantity detection unit (80) for detecting, for each of the plurality of drive devices (10), a load between the meshing portion (24a) of the each of the plurality of drive devices (10) and the ring gear (107);
**characterized in that** it further comprises:
a control unit (110) for controlling the motor drive portion (48) of each of the plurality of drive devices (10) and/or the ring gear braking portion (60) based on the load for the each of the plurality of drive devices (10) detected by the state quantity detection unit (80),
wherein in a case (21) where, based on a result of detection by the state quantity detection unit (80), a degree of variation in the load among the plurality of drive devices (10) is outside a permissible range, the control unit (110) is configured to perform at least one of a first control process and a second control process, the first control process being a process of controlling the motor drive portion (48) of each of the plurality of drive devices (10) to prevent an increase in the degree of variation in the load among the plurality of drive devices (10), the second control process being a process of controlling the ring gear braking portion (60) to increase or decrease a braking force to be applied from the ring gear braking portion (60) to the ring gear (107).

2. The wind turbine drive system (5) according to claim 1, wherein each of the plurality of drive devices (10) is fixed to the first structure via a fastener (30), and
the state quantity detection unit (80) detects the load by measuring an amount of a force acting on the fastener (30).

3. The wind turbine drive system (5) according to claim 1, wherein the state quantity detection unit (80) detects the load by measuring an amount of a force acting on the speed reducing portion (25).

4. The wind turbine drive system (5) according to any one of claims 1 to 3, wherein, in the first control process, the control unit (110) is configured to adjust rotation or a torque of the motor drive portion (48) of each of the plurality of drive devices (10).

5. The wind turbine drive system (5) according to any one of claims 1 to 4, wherein the control unit (110) is configured to perform the first control process so as to reduce the load for a drive device for which the load is largest among the plurality of drive devices (10).

6. The wind turbine drive system (5) according to any one of claims 1 to 5, wherein each of the plurality of drive devices (10) further includes a motor braking portion (50) for braking the corresponding motor drive portion (48), and
when performing the first control process, the control unit (110) is configured to control the motor drive portion (48) and the motor braking portion (50) of each of the plurality of drive devices (10).

7. The wind turbine drive system (5) according to any one of claims 1 to 6, wherein the ring gear braking portion (60) includes a caliper brake mechanism, and
the control unit (110) is configured to control the caliper brake mechanism in the second control process.

8. The wind turbine drive system (5) according to any one of claims 1 to 7, wherein, based on a magnitude of the load for each of the plurality of drive devices (10) detected by the state quantity detection unit (80), the control unit (110) is configured to determine whether or not to perform at least one of the first control process and the second control process.

9. A wind turbine, comprising:
a first structure (103) and a second structure (102) configured to rotate relative to each other;
a ring gear (107) provided in the second structure (102); and
the wind turbine drive system (5) according to any one of claims 1 to 8.

## Patentansprüche

1. Windturbinen-Antriebssystem (5), das umfasst:
eine Vielzahl von Antriebsvorrichtungen (10), die in einer ersten Struktur (103) vorhanden sind und einen Eingriffsabschnitt (24a) umfassen, der mit einem Zahnkranz (107) in Eingriff ist, der in einer zweiten Struktur (102) vorhanden ist, wobei die erste Struktur (103) und die zweite Struktur (102) so ausgeführt sind, dass sie sich relativ zueinander drehen, und jede der Vielzahl von Antriebsvorrichtungen (10) enthält:
einen Motor-Antriebsabschnitt (48) zum Ausgeben von Leistung; sowie
einen Drehzahl-Reduzierabschnitt (25) zum Empfangen der von dem Motor-Antriebsabschnitt (48) übertragenen Leistung;
einen Zahnkranz-Bremsabschnitt (60) zum Bremsen des Zahnkranzes (107);
eine Zustandsgrößen-Erfassungseinheit (80) zum Erfassen einer Last zwischen dem Eingriffsabschnitt (24a) jeder der Vielzahl von Antriebsvorrichtungen (10) und dem Zahnkranz (107) für jede der Vielzahl von Antriebsvorrichtungen (10),
**dadurch gekennzeichnet, dass** es des Weiteren umfasst:
eine Steuerungseinheit (110) zum Steuern des Motor-Antriebsabschnitts (48) jeder der Vielzahl von Antriebsvorrichtungen (10) und/oder des Zahnkranz-Bremsabschnitts (60) auf Basis der durch die Zustandsgrößen-Erfassungseinheit (80) erfassten Last für jede der Vielzahl von Antriebsvorrichtungen (10),
wobei die Steuerungseinheit (110) so ausgeführt ist, dass sie in einem Fall (21), in dem auf Basis eines Ergebnisses von Erfassung durch die Zustandsgrößen-Erfassungseinheit (80) ein Grad von Änderung der Last unter der Vielzahl von Antriebsvorrichtungen (10) außerhalb eines zulässigen Bereiches liegt, einen ersten Steuerungsprozess oder/und einen zweiten Steuerungsprozess durchführt, wobei der erste Steuerungsprozess ein Prozess ist, in dem der Motor-Antriebsabschnitt (48) jeder der Vielzahl von Antriebsvorrichtungen (10) so gesteuert wird, dass eine Zunahme des Grades von Änderung der Last unter der Vielzahl von Antriebsvorrichtungen (10) verhindert wird, der zweite Steuerungsprozess ein Prozess ist, in dem der Zahnkranz-Bremsabschnitt (60) so gesteuert wird, dass eine von dem Zahnkranz-Bremsabschnitt (60) auf den Zahnkranz (107) auszuübende Bremskraft vergrößert oder verkleinert wird.

2. Windturbinen-Antriebssystem (5) nach Anspruch 1, wobei jede der Vielzahl von Antriebsvorrichtungen (10) über ein Befestigungselement (30) an der ersten Struktur befestigt ist und
die Zustandsgrößen-Erfassungseinheit (80) die Last durch Messen eines Betrages einer auf das Befestigungselement (30) wirkenden Kraft erfasst.

3. Windturbinen-Antriebssystem (5) nach Anspruch 1, wobei die Zustandsgrößen-Erfassungseinheit (80) die Last durch Messen eines Betrages einer auf den Drehzahl-Reduzierabschnitt (25) wirkenden Kraft erfasst.

4. Windturbinen-Antriebssystem (5) nach einem der Ansprüche 1 bis 3, wobei die Steuerungseinheit (110) so ausgeführt ist, dass sie in dem ersten Steuerungsprozess Drehung oder ein Drehmoment des Motor-Antriebsabschnitts (48) jeder der Vielzahl von Antriebsvorrichtungen (10) einstellt.

5. Windturbinen-Antriebssystem (5) nach einem der Ansprüche 1 bis 4, wobei die Steuerungseinheit (110) so ausgeführt ist, dass sie den ersten Steuerungsprozess so durchführt, dass die Last für eine Antriebsvorrichtung reduziert wird, für die die Last unter der Vielzahl von Antriebsvorrichtungen (10) am größten ist.

6. Windturbinen-Antriebssystem (5) nach einem der Ansprüche 1 bis 5, wobei jede der Vielzahl von Antriebsvorrichtungen (10) des Weiteren einen Motor-Bremsabschnitt (50) zum Bremsen des entsprechenden Motor-Antriebsabschnitts (48) enthält, und
die Steuerungseinheit (110) so ausgeführt ist, dass sie beim Durchführen des ersten Steuerungsprozesses den Motor-Antriebsabschnitt (48) und den Motor-Bremsabschnitt (50) jeder der Vielzahl von Antriebsvorrichtungen (10) steuert.

7. Windturbinen-Antriebssystem (5) nach einem der Ansprüche 1 bis 6, wobei der Zahnkranz-Bremsabschnitt (60) einen Sattel-Bremsmechanismus enthält und
die Steuerungseinheit (110) so ausgeführt ist, dass sie in dem zweiten Steuerungsprozess den Sattel-Bremsmechanismus steuert.

8. Windturbinen-Antriebssystem (5) nach einem der Ansprüche 1 bis 7, wobei die Steuerungseinheit (110) so ausgeführt ist, dass sie auf Basis eines Betrages der von der Zustandsgrößen-Erfassungseinheit (80) für jede der Vielzahl von Antriebsvorrichtungen (10) erfassten Last feststellt, ob der erste Steuerungsprozess oder/und der zweite Steuerungsprozess durchgeführt wird/werden.

9. Windturbine, umfassend:
eine erste Struktur (103) und eine zweite Struktur (102), die so ausgeführt sind, dass sie sich relativ zueinander drehen;
einen Zahnkranz (107), der in der zweiten Struktur (102) vorhanden ist; und
das Windturbinen-Antriebssystem (5) nach einem der Ansprüche 1 bis 8.

## Revendications

1. Système d'entraînement d'éolienne (5), comprenant :
une pluralité de dispositifs d'entraînement (10) agencés dans une première structure (103) et comprenant une partie d'engrènement (24a) s'engrenant avec une couronne dentée (107) agencée dans une seconde structure (102), la première structure (103) et la seconde la structure (102) étant configurées pour tourner l'une par rapport à l'autre, dans lequel chacun de la pluralité de dispositifs d'entraînement (10) comprenant :
une partie d'entraînement de moteur (48) pour délivrer en sortie une puissance ; et
une partie de réduction de vitesse (25) pour recevoir la puissance transmise par la partie d'entraînement de moteur (48) ;
une partie de freinage de couronne dentée (60) pour freiner la couronne dentée (107) ; une unité de détection de quantité d'état (80) pour détecter, pour chacun de la pluralité de dispositifs d'entraînement (10), une charge entre la partie d'engrènement (24a) de chacun de la pluralité de dispositifs d'entraînement (10) et la couronne dentée (107) ; **caractérisé en ce qu'**il comprend en outre :
une unité de commande (110) pour commander la partie d'entraînement de moteur (48) de chacun de la pluralité de dispositifs d'entraînement (10) et/ou la partie de freinage de couronne dentée (60) sur la base de la charge pour chacun de la pluralité de dispositifs d'entraînement (10) détectée par l'unité de détection de quantité d'état (80),
dans lequel, dans un cas (21) où, sur la base d'un résultat de détection par l'unité de détection de quantité d'état (80), un degré de variation de la charge parmi la pluralité de dispositifs d'entraînement (10) est en dehors d'une plage autorisée, l'unité de commande (110) est configurée pour effectuer au moins l'un parmi un premier processus de commande et un second processus de commande, le premier processus de commande étant un processus de commande de la partie d'entraînement de moteur (48) de chacun de la pluralité de dispositifs d'entraînement (10) pour empêcher une augmentation du degré de variation de la charge parmi la pluralité de dispositifs d'entraînement (10), le second processus de commande étant un processus de commande de la partie de freinage de couronne dentée (60) pour augmenter ou diminuer une force de freinage à appliquer depuis la partie de freinage de couronne dentée (60) à la couronne dentée (107).

2. Système d'entraînement d'éolienne (5) selon la revendication 1, dans lequel chacun de la pluralité de dispositifs d'entraînement (10) est fixé à la première structure via un élément de fixation (30), et
l'unité de détection de quantité d'état (80) détecte la charge en mesurant une quantité d'une force agissant sur l'élément de fixation (30).

3. Système d'entraînement d'éolienne (5) selon la revendication 1, dans lequel l'unité de détection de quantité d'état (80) détecte la charge en mesurant une quantité d'une force agissant sur la partie de réduction de vitesse (25).

4. Système d'entraînement d'éolienne (5) selon l'une quelconque des revendications 1 à 3, dans lequel, dans le premier processus de commande, l'unité de commande (110) est configurée pour ajuster une rotation ou un couple de la partie d'entraînement de moteur (48) de chacun de la pluralité de dispositifs d'entraînement (10).

5. Système d'entraînement d'éolienne (5) selon l'une quelconque des revendications 1 à 4, dans lequel l'unité de commande (110) est configurée pour effectuer le premier processus de commande de manière à réduire la charge pour un dispositif d'entraînement pour lequel la charge est la plus grande parmi la pluralité de dispositifs d'entraînement (10).

6. Système d'entraînement d'éolienne (5) selon l'une quelconque des revendications 1 à 5, dans lequel chacun de la pluralité de dispositifs d'entraînement (10) comprend en outre une partie de freinage de moteur (50) pour freiner la partie d'entraînement de moteur correspondante (48), et
lors de l'exécution du premier processus de commande, l'unité de commande (110) est configurée pour commander la partie d'entraînement de moteur (48) et la partie de freinage de moteur (50) de chacun de la pluralité de dispositifs d'entraînement (10).

7. Système d'entraînement d'éolienne (5) selon l'une quelconque des revendications 1 à 6, dans lequel la partie de freinage de couronne dentée (60) comprend un mécanisme de frein à étrier, et
l'unité de commande (110) est configurée pour commander le mécanisme de frein à étrier dans le second processus de commande.

8. Système d'entraînement d'éolienne (5) selon l'une quelconque des revendications 1 à 7, dans lequel, sur la base d'une grandeur de la charge pour chacun de la pluralité de dispositifs d'entraînement (10) détectée par l'unité de détection de quantité d'état (80), l'unité de commande (110) est configurée pour déterminer s'il faut ou non effectuer au moins l'un parmi le premier processus de commande et le second processus de commande.

9. Éolienne, comprenant :
une première structure (103) et une seconde structure (102) configurées pour tourner l'une par rapport à l'autre ;
une couronne dentée (107) agencée dans la seconde structure (102) ; et
le système d'entraînement d'éolienne (5) selon l'une quelconque des revendications 1 à 8.
